# EUROPÄISCHE PATENTSCHRIFT

(11) **EP 1 155 785 B1**
(45) Veröffentlichungstag und Bekanntmachung des Hinweises auf die Patenterteilung: **22.06.2016**
(21) Anmeldenummer: 01111510.2
(22) Anmeldetag: 11.05.2001
(51) Int. Cl.: B25J 9/10

(54) **VORRICHTUNG ZUR BEREICHSÜBERWACHUNG EINES ROBOTERS**
DEVICE FOR MONITORING THE OPERATION RANGE OF A ROBOT
DISPOSITIF POUR CONTRÔLER LA PLAGE DE FONCTIONNEMENT D'UN ROBOT

(30) Priorität: 19.05.2000 DE 20009039 U
(43) Veröffentlichungstag der Anmeldung: 21.11.2001
(73) Patentinhaber: KUKA Roboter GmbH, 86165 Augsburg (DE)
(72) Erfinder: Gerum, Georg, 86399 Bobingen (DE)
(74) Vertreter: Patentanwälte Funk & Böss GbR

(56) Entgegenhaltungen:
- DE-A- 2 146 720
- DE-A- 3 310 135
- DE-A- 3 829 755
- DE-U- 20 002 530
- PATENT ABSTRACTS OF JAPAN vol. 016, no. 359 (M-1289), 4. August 1992 (1992-08-04) -& JP 04 111794 A (SANYO ELECTRIC CO LTD), 13. April 1992 (1992-04-13)

## Beschreibung

Die Erfindung betrifft einen Roboter mit einer Vorrichtung zur Bereichsüberwachung eines Roboters, wobei mindestens ein Bereich einer Drehbewegung um mindestens eine Roboterachse überwacht wird.

Zur Bereichsüberwachung für Roboterachsen werden bisher konventionelle Techniken mit kontaktbehafteten Bauteilen, wie insbesondere mechanische Nockenschalter eingesetzt. Derartige Nockenschalter und zugehörige Auswertungen sind aufwendig und teuer. Darüber hinaus sind taktbehaftete Bauteile einem hohen Verschleiß ausgesetzt, so dass auch ein hoher Überwachungs- und Erneuerungsbedarf gegeben ist. Darüber hinaus können auch sie Fehlfunktionen unterliegen. Darüber hinaus kann bei einer derartigen Überwachung mit mechanischen Schaltern und Relais mit zwangsgeführten Kontakten eine wünschenswerte elektronische Programmierbarkeit und Veränderbarkeit der zu überwachenden Bereiche nicht durchgeführt werden.

Die DE 38 29 755 A1 beschreibt ein Gelenk eines Industrieroboters mit einem ersten Arm und einem, mit dem ersten Arm drehbar verbundenen zweiten Arm, und mit einer Erfassungseinrichtung zur Erfassung der Lage des zweiten Arms in Bezug zum ersten Arm, die einen an einer Transmissionswelle befestigten Ansatz umfasst, wobei ein Schwinghebel schwenkbar mit dem ersten Arm zur Anordnung in alternativen Lagen je nach Drehrichtung des Ansatzes verbunden ist, und die Erfassungseinrichtung zur Erfassung der alternativen Lagen des Schwinghebels vorgesehen ist.

Die JP 04111794 A offenbart einen Roboterarm, der einen teilringförmigen Nocken aufweist, der mit einem einzigen Schalter vom Kontaktlosen Typ zusammenwirkt.

Der Erfindung liegt daher die Aufgabe zugrunde eine Bereichsüberwachung zu schaffen, bei der die vorgenannten Nachteile überwunden sind.

Erfindungsgemäß wird die genannte Aufgabe bei einem Roboter der eingangs genannten Art dadurch gelöst, dass mit koaxial zur überwachenden Achse angeordneten teilringförmigen Nocken zusammenwirkende Initiatoren vorgesehen sind, wobei die Initiatoren mit einer Auswerteeinrichtung in Verbindung stehen und, wobei ein als Öffner arbeitender Initiator einem einen Gefahrenbereich entsprechenden Nocken und ein als Schließer arbeitender Initiator an einem Freigabebereich entsprechenden Nocken für den gleichen zu überwachenden Bereich zugeordnet sind.

Die Erfindung sieht also zur Lösung die Verwendung von elektronischen Initiatoren, wie insbesondere elektronischen Näherungsschaltern vor, die mit einer Auswerteeinrichtung verbunden sind. Es ist dabei vorgesehen, dass jedem zu überwachenden Bereich, bestehend aus Freigabe- bzw. Arbeitsbereich und Gefahrenbereich mindestens zwei unabhängig voneinander arbeitende Initiatoren vorgesehen sind, wodurch eine hohe Sicherheit erreicht wird. Es ist vorgesehen, dass ein als Öffner arbeitender Initiator einem einen Gefahrenbereich entsprechenden Nocken und ein als Schließer arbeitender Initiator an einem Freigabebereich entsprechenden Nocken für den gleichen überwachenden Bereich zugeordnet sind. Die beiden Initiatoren können durch die Auswerteeinrichtung permanent hinsichtlich ihrer Funktionstüchtigkeit überwacht werden. Durch die Erfindung wird eine Bereichsüberwachung für Roboterachsen in sicherer Technik möglich, mittels der für die einzelnen Roboter achsbezogene Bewegungsbereiche gesperrt werden können, um Personen und Material zu schützen. Dennoch genügt die erfindungsgemäße Vorrichtung der hohen Anforderung an die Sicherheit der Überwachungskreise zum Personenschutz.

In bevorzugter Weiterbildung kann vorgesehen sein, dass durch koaxial zur Achse, um die eine Bewegung überwacht wird, angeordnete Nutenleisten mit Nocken verbunden sind und dass jedem Nocken ein Initiator zugeordnet ist.

Weiterbildungen der Erfindung sehen vor, dass die Nocken durch zweiteilige Nockenendstücke gehalten sind, deren Unterteil in der Nockenleiste in Radialbewegung formschlüssig gehalten ist und deren Oberteil mit dem Unterteil verbunden ist, wobei insbesondere Unterteil und Oberteil zur kraftschlüssigen Festlegung an der Nutenleiste gegeneinander und gegen diese verspannbar sind.

In einer anderen erfindungsgemäßen Ausgestaltung ist vorgesehen, dass ein Nocken zwischen zwei Nockenendstücken festgelegt ist, wobei darüber hinaus vorgesehen sein kann, dass ein Nocken mit den Nockenendstücken durch Gewindestifte verbunden ist.

Eine weitere bevorzugte Ausbildung der Erfindung zeichnet sich dadurch aus, dass die Initiatoren relativ zu den ihnen zugeordneten Nocken radial und in Höhenrichtung parallel zur Achse, zu der die Nocken koaxial angeordnet sind, verstellbar und feststellbar sind. In Weiterbildung ist eine mindestens zweikanalige Überwachung für jeden zur überwachenden Bereich vorgesehen.

Schließlich kann erfindungsgemäß eine Kombination einer Bereichsüberwachung der Bewegung des Roboters mit einer Zugangsüberwachung zum Roboter vorgesehen sein.

Weitere Vorteile und Merkmale der Erfindung ergeben sich aus den Ansprüchen und aus der nachfolgenden Beschreibung, in der ein Ausführungsbeispiel der Erfindung unter Bezugnahme auf die Zeichnung im einzelnen erläutert ist. Dabei zeigt:
- Fig. 1: eine rückwärtige Ansicht eines Roboters, bei dem die Erfindung vorgesehen ist;
- Fig. 2: eine Seitenansicht des unteren Bereichs (Sockel, Karussell, Schwingenanlenkung) eines Roboters in Seitenansicht;
- Fig. 3: eine vertikale Sicht auf die Karussellplatte eines Roboters und die anordnungsgemäße Vorrichtung zur Überwachung der Al-Achse;
- Fig. 4: eine Darstellung zur Auslegung der Überwachungsbereiche um eine Achse;
- Fig. 5: die Festlegung eines Nockens an einer Nutenleiste;
- Fig. 5a-c: die Festlegung von Nocken an einer Nutenleiste sowie die Zuordnung der Initiatoren zu den Nocken;
- Fig. 6: eine Sicht auf einen Endnocken;
- Fig. 7: eine Seitenansicht einer Schwinge mit Nutenleisten und Nocken sowie zugeordneten Initiatoren;
- Fig. 8a,b: eine Sicht entsprechend dem Pfeil VIII der Fig. 7 auf den oberen Bereich von Schwinge und Arm eines Roboters;
- Fig. 9: eine schematische Schaltdarstellung zur Kombination von Bereichsüberwachung der Roboterbewegung und Zugangsüberwachung.

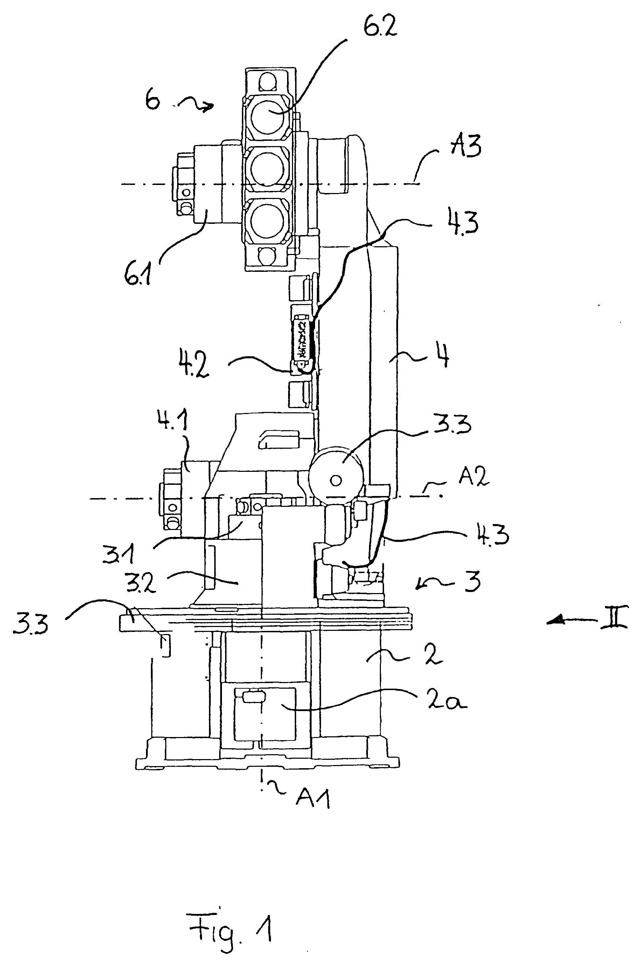

Die Erfindung bezieht sich auf einen herkömmlichen Roboter 1, wie einen Industrieroboter. Dieser weist einen fest mit dem Boden verbundenen Sockel 2, ein relativ zum Sockel 2 um die vertikale A1-Achse drehbares Karussell 3, eine an diesem angelenkte und relativ zu diesem um die horizontale A2-Achse verschwenkbare Schwinge 4 sowie einen relativ zu dieser um die A3-Achse verschwenkbaren Roboterarm 6 auf. Als weitere Elemente des Roboters 1 sind in der Fig. 1 erkennbar: ein erster Motor 3.1 zum Antrieb des Karussells 3 um die A1-Achse, angeordnet in einer Tragkonstruktion 3.2 für die Schwinge 4, ein Gewichtsausgleich 3.3 für die Schwinge 4, angelenkt zwischen dieser und dem Karussell 3, ein zweiter Motor 4.1 zur Bewegung der Schwinge 4 um die A2-Achse, sowie ein dritter Motor 6.1 zur Bewegung des Arms 6 um die A3-Achse.

An der Rückseite des Arms 6 sind übereinander drei Motoren, von denen lediglich der obere Motor 6.2 bezeichnet ist, zum Antrieb der Fig. 1 nicht dargestellten gelenkig ausgebildeten Hand eines Roboters mit ihren drei Achsen A4 bis A6 dargestellt.

4.2 bezeichnet einen Halter für Näherungsschalter für die Bewegung um die A2- und die A3-Achse überwachende Initiatoren. 4.3 ist die Steuerleitung für diese Initiatoren.

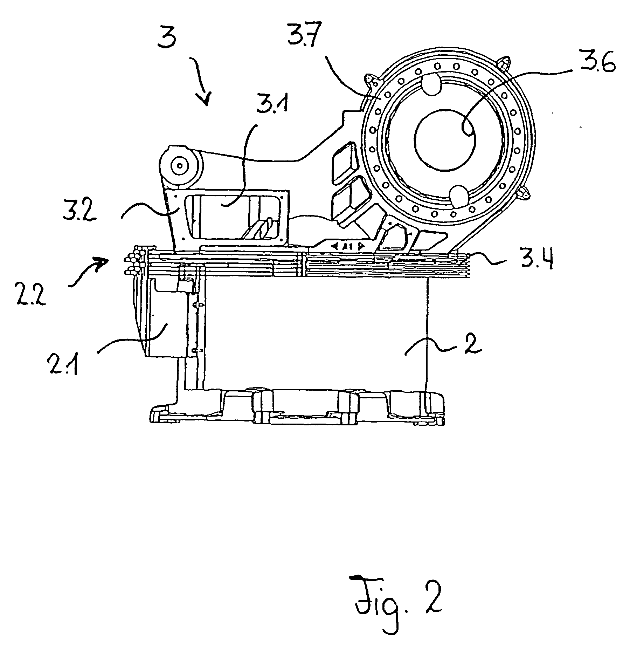

Die Fig. 2 zeigt im unteren Bereich einen solchen Roboters in einer Seitenansicht entsprechend dem Pfeil II der Fig. 1 in detaillierterer Darstellung.

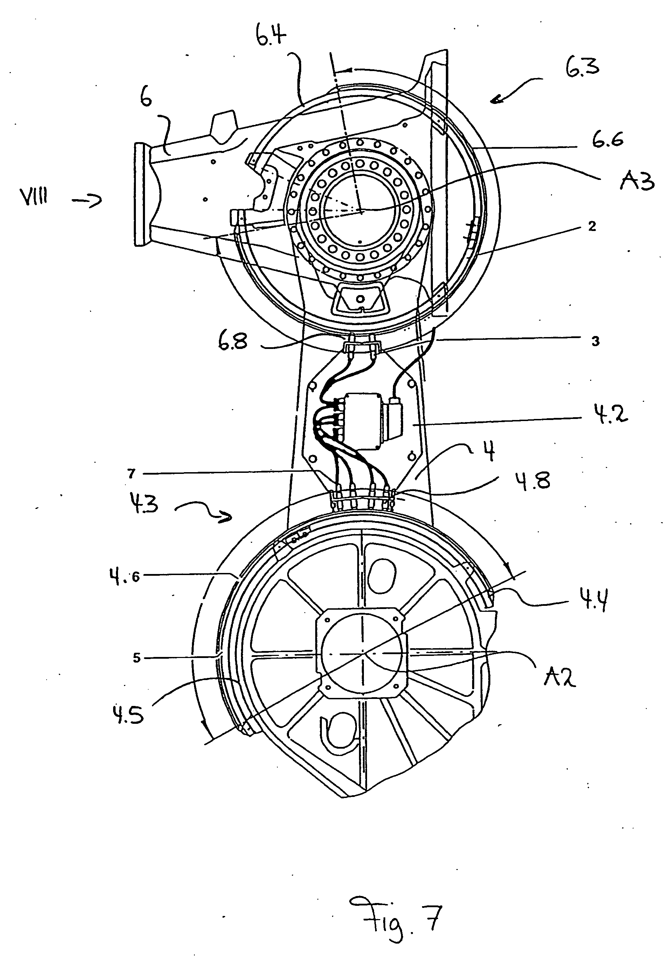

Am Umfang der Karussellplatte 3.3 (Fig. 1) sind Nutenleisten 3.4 befestigt. Im dargestellten Ausführungsbeispiel handelt es sich um zwei halbkreisförmige Nutenleisten, die gemeinsam vollständig die Karussellplatte 3.3 umgeben. An den Nutenleisten 3.4 sind Nocken festgelegt (nähere Beschreibung im folgenden), die also zusammen mit dem Karussell 3 relativ zum Sockel 2 verschwenkbar sind. Am Sockel 2 befindet sich ein Halter 2.1 für den Nocken der Nutenleiste 3.4 zugeordnete Initiatoren 2.2. Die Tragkonstruktion 3.2 für die Schwinge 4 trägt ein Lager 3.6 für diese. Um einen das Lager 3.3 umgebenden Tragring 3.7 sind Nutenleisten für Nocken zur Überwachung der Bewegung der Schwinge 4 angebracht, die in der Fig. 2 selbst nicht dargestellt sind und weiter unten unter Bezug auf die Fig. 7 ff näher erläutert werden.

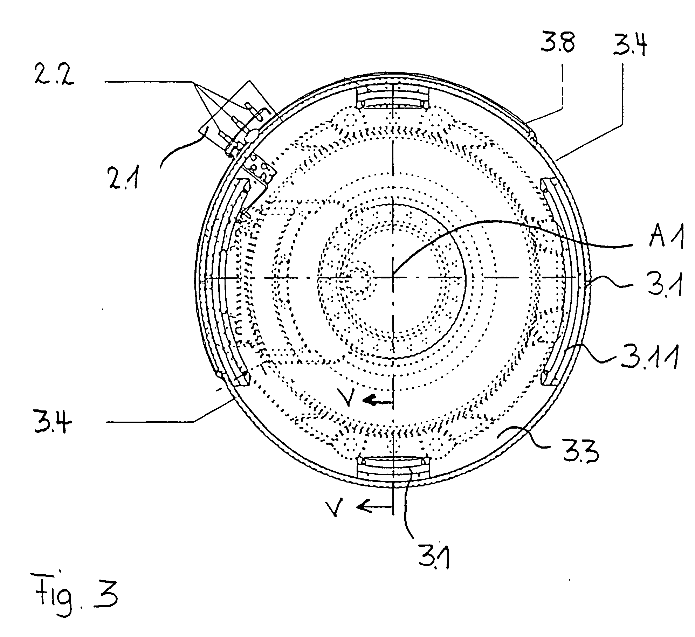

Die Fig. 3 zeigt eine Karussellplatte, wobei konstruktive Elemente des Karussells 3 auf dieser gestrichelt dargestellt sind. Um die Karussellplatte 3.3 finden sich die Nutenleisten 3.4, an denen in einem Überwachungsbereich Nocken 3.8 festgelegt sind. Diesen sind die vom Halter 2.1 gehaltenen Initiatoren 2.2 zugeordnet.

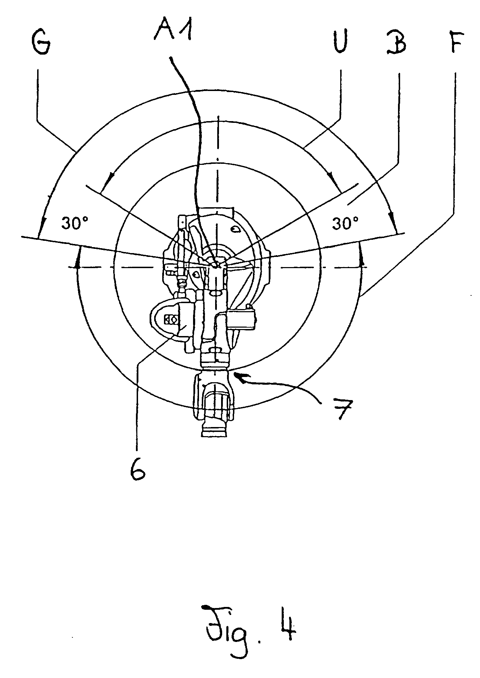

In der Fig. 4 sind schematisch die bei einer Überwachung der Bewegung des Roboters, genauer seines Karussells 3 um die A1-Achse gegebenen Bereich dargestellt. Die Länge einer Schaltnocke 3.8 und damit der von ihr abgedeckte Winkel ist abhängig von der Größe des Überwachungsbereiches U. Der hierdurch überwachte Gefahrenbereich G besteht aus dem Winkel des Überwachungsbereichs U und einem weiteren Winkelbereich B für den Bremsweg von ca. 30° des Roboters bei Maximalgeschwindigkeit. Der Bremsweg des Roboters ist dabei abhängig von seiner Massenträgheit. Der so definierte Gefahrenbereich G wird durch einen als Öffner wirkenden Näherungsinitiator abgesichert.

Der Freigabebereich F innerhalb dessen der Roboter arbeiten kann, beinhaltet einen Winkel zwischen 360° und dem im Gefahrenbereich G bestimmten Winkel. Er ist durch eine seinem Winkel entsprechende Nocke abgesichert. Die Gesamtlänge der Nocken beträgt immer 360°. Der Freigabebereich F wird durch einen als Schließer wirkenden Näherungsinitiator überwacht.

Demgemäss schaltet der Initiator für den Freigabebereich F, solange er den Nocken "sieht" dergestalt, dass der Schalter, Relais etc. zur Stromversorgung des entsprechenden Antriebs, hier des Motors 3.1 zur Bewegung um die A1-Achse eine Stromversorgung desselben erlaubt, während bei der Bewegung des Roboters aus diesem Bereich, eine Stillsetzung des entsprechenden Antriebs ermöglicht wird bzw. erfolgt, gegebenenfalls soweit weitere Bedingungen erfüllt sind, wie beispielsweise Öffnung des Zugangs zu dem Bereich, in dem der Roboter arbeitet, wie seine Arbeitszelle. Der den Gefahrenbereich G überwachende als Öffner wirkende Initiator erlaubt, soweit er seine ihm zugeordnete Nocke nicht sieht, den Antrieb. Bewegt sich die ihm zugeordnete Nocke in seinen Bereich, stellt er Schalter, Relais etc. in eine Stellung, die ein Stillsetzen des entsprechenden Roboterantriebs bedingt bzw. erlaubt, soweit die genannten weiteren Bedingungen erfüllt sind. Der Näherungsinitiator für den Gefahrenbereich G und der Näherungsinitiator für den Freigabebereich F sind dabei derart geschaltet, dass, wenn sich der Roboter aus dem Freigabebereich F heraus in den Gefahrenbereich G bewegt und einer der beiden Schalter dies feststellt, ein Stillsetzen des Roboterantriebs ermöglicht bzw. gegebenenfalls bei vorliegender weiterer Bedingung bewirkt wird. Die Funktion der Initiatoren kann dabei in an sich üblicher Weise permanent überwacht werden.

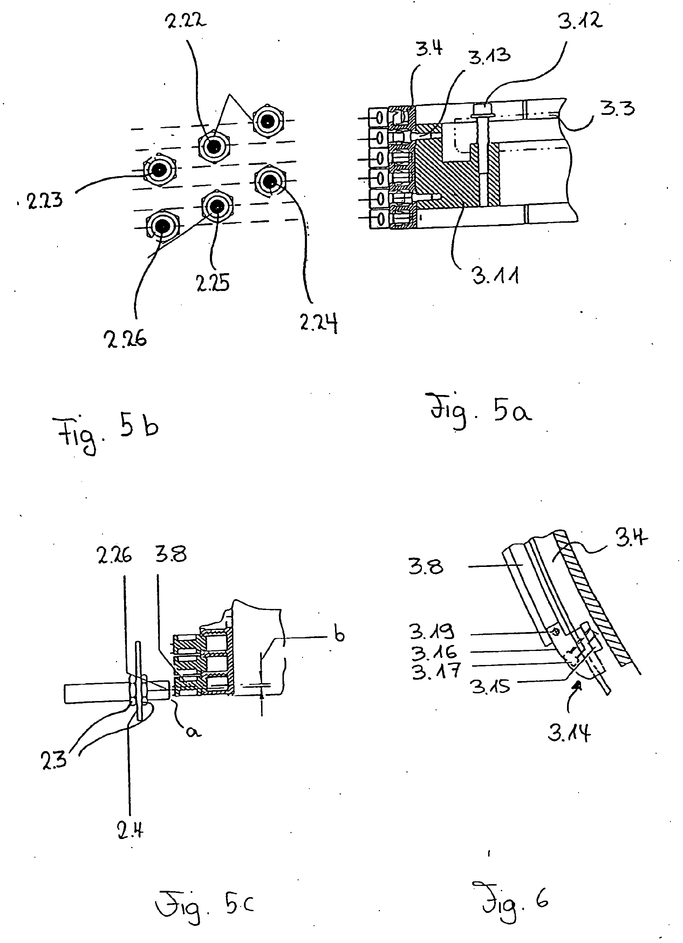

Die Fig. 5a zeigt die Festlegung der Nutenleisten 3.4 an der Karussellplatte 3.3 bzw. einem äußeren Umfangsbereich derselben, in Fig. 5a gestrichelt dargestellt. Zunächst sind an der Karussellplatte 3.3 Teilringsegmente 3.11 mittels Schrauben 3.12, wie Innensechskantschrauben festgelegt. Die Nutenleisten 3.4 sind an diesen Segmenten 3.11 ebenfalls mittels Schrauben 3.13, wie Innensechskantschrauben festgelegt. An den Nutenleisten 3.4 sind wiederum im zu überwachenden Bereich die Nocken 3.8 (Fig. 5c, 6) mittels der Endstücke 3.14 befestigt. Jedes Nockenendstück besteht aus einem Unterteil 3.15 und einem Oberteil 3.16, die mittels einer Schraube 3.17 miteinander verbunden sind. Das Unterteil wird dabei formschlüssig in einer Nut der Nutenleiste gehalten. Solange die Schraube 3.17 nicht fest angespannt ist, sind die Nockenendstücke 3.16 entlang der Nutenleiste 3.4 verschiebbar. Durch Festziehen der Schraube 3.17 erfolgt eine sichere kraftschlüssige Festlegung. Zwischen Nockenendstücken 3.14 wie eines in der Fig. 6 im einzelnen dargestellt ist, wird ein Nocken 3.8 gehalten, der mit einem Nockenendstück jeweils einem Gewindestift 3.19 verbunden ist.

Jedem Nocken 3.8 ist in der Regel ein Initiator 2.21 bis 2.26 zugeordnet. Da für einen zu überwachenden Bereich (bestehend aus Gefahr- und Freigabebereich) zwei Nocken, deren Gesamtumfang 360° abdeckt, vorgesehen sind und jedem dieser Nocken ein Initiator, beispielsweise 2.21 und 2.22 (Fig. 6) zugeordnet sind wird ein solcher erster Bereich durch die beiden genannten Initiatoren überwacht. Entsprechendes gilt bei der Darstellung der Fig. 7 für die Initiatoren 2.23, 2.24 zur Überwachung eines anderen Bereichs, bei dem Nocken relativ zu dem ersten Bereich unterschiedlich angeordnet sind und gegebenenfalls unterschiedliche Längen aufweisen, und schließlich für die Initiatoren 2.25 und 2.26 zur Überwachung eines dritten Bereichs. Bei der in der Fig. 5b dargestellten Ausgestaltung können also drei unterschiedliche Bereiche mit jeweils unterschiedlichem Gefahr- und Freigabebereich überwacht werden.

Wichtig ist, dass die Initiatoren, beispielsweise in der Fig. 5c der Initiator 2.26, genau in der Höhe des zugeordneten Nockens 3.8 angeordnet ist und zu dessen äußerer Stirnseite einen vorgegebenen definierten Abstand aufweisen, da einerseits die Initiatoren die Nocken nicht berühren dürfen, andererseits ein Maximalabstand nicht übertroffen werden darf. Die Einstellung des radialen Abstandes der Initiatoren relativ zu der freien Außenseite des radialen Abstandes und damit des Radialspaltes an den Initiatoren relativ zur freien Außenseite der Nocken kann mittels einer Einstelllehre mit einer vorbestimmten Stärke erfolgen. Diese wird zwischen Nocken und Initiator geschoben. Anschließend wird der Initiator soweit gegen den Nocken bewegt, bis sich die Einstelllehre gerade noch herausziehen lässt. Der Initiator (2.26 in Fig. 5c) wird durch Anstellen und Anziehen von Konterschrauben 2.3 in seiner Radialstellung festgelegt. Der Spalt a kann je nach Hersteller zwischen 2 mm und 3 mm liegen.

Wesentlich ist darüber hinaus, dass die Initiatoren in ihrer Höheneinstellung mit den zugeordneten Nocken übereinstimmen, d.h. die Mittelachse eines Initiators, wie des Initiators 2.26 relativ zur Mittelebene des Nockens, wie des Nockens 3.8 in Fig. 5c einen größeren als einen vorgegebenen Versatz b aufweisen und zwar über den gesamten Winkel- und Längenbereich, der durch den entsprechenden Nocken 3.8 abgedeckt wird. Der Höhenversatz b darf in der Regel nicht mehr als 0.5 mm aufweisen. Die Initiatoren werden in ihrer Höhe mittels eines Halters 2.4 eingestellt, der entlang seiner Ausrichtung und damit relativ zur Mittelebene der Nocken verschiebbar ist.

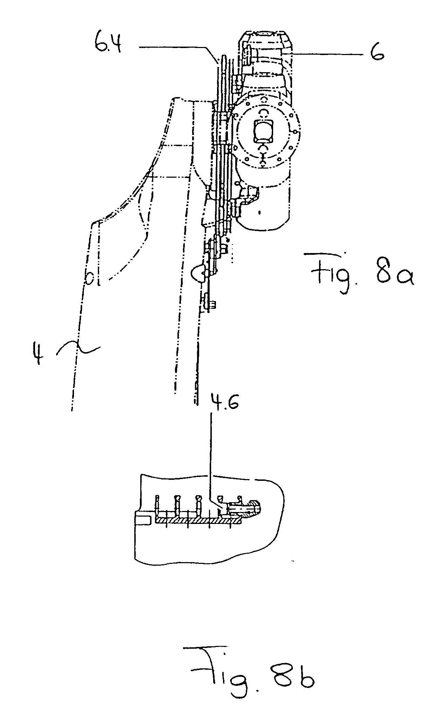

Die Fig. 4 zeigt Vorrichtungen 4.3 und 6.3 zur Bereichsüberwachung der Bewegung der Schwinge bzw. des Roboterarms 6 um die A2- bzw. die A3-Achse. Auch hier sind um die jeweilige Achse Nutenleisten 4.4 bzw. 6.4 vorgesehen. Diese sind, wie insbesondere aus Fig. 8b entnehmbar ist, nicht radial, sondern durch achsparallel gerichtete Schrauben 4.6 (bzw. entsprechende Schrauben für die Nutenleiste 6.3) am jeweiligen Lagerkranz um die A2- bzw. A3-Achse festgelegt. Die Nutenleisten 4.4, 6.4 tragen in der unter Bezugnahme auf die Vorrichtung zur Bereichsüberwachung für die Bewegung um die A1-Achse oben beschriebenen Weise festgelegte Nocken 4.6 bzw. 6.6 sowie diesen zugeordnete Initiatoren 4.8, 6.8, die über den Halter 4.2 an der Schwinge 4 festgelegt sind. Dabei sind die Leisten 4.4 und die Nocken 4.6 fest am Lagerkranz 4.5 für die Lagerung der Schwinge 4 am Karussell 3 und die Nutenleisten 6.4 mit den Nocken 6.6 drehfest am Roboterarm 6 angeordnet, so dass die Nocken 4.6 und 6.6 verschwenkbar sind.

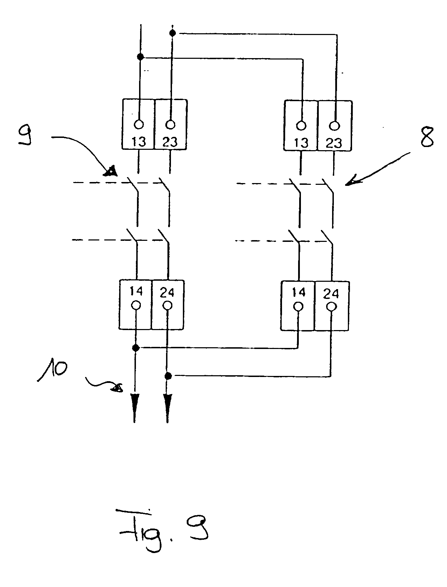

Die Fig. 9 zeigt ein Beispiel eines Freigabekreises für einen Überwachungsbereich. Hierbei sind Freigabekontakte 8 für den Zugang zur Arbeitszelle eines Roboters, wie beispielsweise Freigabekontakte einer Türe parallel zu den Freigabekontakten 9 des für diesen Bereich zugehörigen Sicherheitsrelais der Bereichsüberwachung des Roboters geschaltet. Die Leitungen 10 führen zu den Leistungsschaltelementen für die Energieversorgung der Antriebe.

Wenn ein Roboter, d.h. sein Roboterarm 6 mit seiner Roboterhand 7 sich im Bereich oder in der Nähe einer Schutzeinrichtung, wie einer Schutztüre, einem Lichtfaden oder ähnlichem befindet, so darf die Fahrfreigabe des Roboters für diesen Schutztürbereich nur bei geschlossener Schutztüre erfolgen; wird die Schutztüre geöffnet, führt dies zum sofortigen Stillstand des Roboters. Findet sich der Roboter mit seinem Roboterarm 6 nicht im Schutztürbereich, sind Näherungsinitiatoren auf den Nocken so eingestellt, dass der Näherungsinitiator mit der Funktion eines Schließers einer Dämpfung unterliegt und der Näherungsinitiator mit der Funktion eines Öffners nicht gedämpft ist. Das Sicherheitsrelais gibt eine zweikanalige Freigabe. Die Schutztür kann bei einer solchen Roboterstellung geöffnet werden, ohne dass der Roboter in Stillstand gesetzt wird. Erst wenn sich der Schaltzustand bei geöffneter Schutztür eines Näherungsinitiators ändert, in dem der Roboter beispielsweise in den Schutztürbereich verfährt, fällt das Sicherheitsrelais ab und der Roboter wird sofort in Stillstand versetzt.

### Bezugszeichenliste

- 1: Roboter
- 2: Sockel
- 2a: Auswerteeinrichtung
- 2.1: Halter
- 2.2: Initiatoren
- 2.21-2.26: Initiatoren
- 3: Karussell
- 3.1: Motor
- 3.2: Tragkonstruktion
- 3.3: Karussellplatte
- 3.4: Nutenleiste
- 3.7: Tragring
- 3.8: Nocken
- 3.11: Teilringsegmente
- 3.12: Schrauben
- 3.13: Schrauben
- 3.14: Nockenendstücke
- 3.15: Unterteil
- 3.16: Oberteil
- 3.17: Schrauben
- 3.19: Gewindestift
- 4: Schwinge
- 4.2: Halter
- 4.3: Steuerleitung
- 4.4: Nutenleiste
- 4.6: Nocken
- 4.8: Initiatoren
- 6: Roboterarm
- 6.1: Motor
- 6.2: Motor
- 6.4: Nutenleiste
- 6.6: Nocken
- 6.8: Initiatoren
- 7: Roboterhand
- 8: Freigabekontakt
- 9: Freigabekontakt
- 10: Leitungen
- G: Gefahrenbereich
- U: Überwachungsbereich
- B: Winkelbereich
- F: Freigabebereich
- A1-Achse:
- A2-Achse:
- A3-Achse:

## Patentansprüche

1. Roboter mit einer Vorrichtung zur Bereichsüberwachung, wobei mindestens ein Bereich einer Drehbewegung um mindestens eine Roboterachse überwacht wird, wobei mit koaxial zur überwachenden Achse (A1, A2, A3) angeordneten teilringförmigen Nocken (3.8, 4.6, 6.6) zusammenwirkende Initiatoren (2.2, 2.21-2.26; 4.8; 6.8) vorgesehen sind, wobei die Initatoren (2.2, 2.21-2.26; 4.8; 6.8) mit einer Auswerteeinrichtung (2a) in Verbindung stehen und, wobei ein als Öffner arbeitender Initiator (2.2, 2.21-2.26; 4.8; 6.8) einem einen Gefahrenbereich entsprechenden Nocken und ein als Schließer arbeitender Initiator einem Freigabebereich entsprechenden Nocken für den gleichen zu überwachenden Bereich zugeordnet sind.

2. Roboter nach Anspruch 1, **gekennzeichnet durch** koaxial zur Achse (A1, A2, A3), um die eine Bewegung überwacht wird, angeordnete Nutenleisten (3.4, 4.4, 6.4), die mit Nocken (3.8, 4.6, 6.6) verbunden sind, wobei jedem Nocken (3.8, 4.6, 6.6) ein Initiator (2.2, 2.21-2.26; 4.8; 6.8) zugeordnet ist.

3. Roboter nach Anspruch 1 oder 2, **dadurch gekennzeichnet, dass** jedem Nocken (3.8, 4.6, 6.6) jeweils zwei Initiatoren (2.2, 2.21-2.26; 4.8; 6.8) zugeordnet sind.

4. Roboter nach einem der vorangehenden Ansprüche, **dadurch gekennzeichnet, dass** die Initiatoren (2.2, 2.21-2.26; 4.8; 6.8) in einem Halter (2.1, 4.2) gehalten und seitlich der die Nocken (3.8, 4.6, 6.6) tragenden Nutenleisten (3.4, 4.4, 6.4) angeordnet sind.

5. Roboter nach einem der vorangehenden Ansprüche, **dadurch gekennzeichnet, dass** die Nocken (3.8, 4.6, 6.6) durch zweiteilige Nockenendstücke (3.14) gehalten sind, deren Unterteil (3.15) in der Nockenleiste in Radialrichtung formschlüssig gehalten ist und deren Oberteil (3.16) mit dem Unterteil verbunden ist.

6. Roboter nach Anspruch 5, **dadurch gekennzeichnet, dass** Unterteil (3.14, 3.15) und Oberteil (3.16) zur kraftschlüssigen Festlegung an der Nutenleiste (3.4, 4.4, 6.4) gegeneinander und gegen diese verspannbar sind.

7. Roboter nach Anspruch 5 oder 6, **dadurch gekennzeichnet, dass** ein Nocken (3.8, 4.6, 6.6) zwischen zwei Nockenendstücken (3.14) festgelegt ist.

8. Roboter nach Anspruch 7, **dadurch gekennzeichnet, dass** der Nocken (3.8, 4.6, 6.6) mit den Zwischennockenstücken (3.14) durch Gewindestifte verbunden ist.

9. Roboter nach einem der vorangehenden Ansprüche, **dadurch gekennzeichnet, dass** die Initiatoren (2.2, 2.21-2.26; 4.8; 6.8) relativ zu den ihnen zugeordneten Nocken (3.8, 4.6, 6.6) radial und in Höhenrichtung parallel zur Achse, zu der die Nocken (3.8, 4.6, 6.6) koaxial angeordnet sind, verstellbar und feststellbar sind.

10. Roboter nach einem der vorangehenden Ansprüche, **gekennzeichnet durch** eine mindestens zweikanalige Überwachung für jeden zu überwachenden Bereich (G, F).

11. Roboter nach einem der vorangehenden Ansprüche, **gekennzeichnet durch** eine Kombination einer Bereichsüberwachung der Bewegung des Roboters mit einer Zugangsüberwachung zum Roboter.

## Claims

1. Robot having a device for area monitoring, wherein at least one area of a rotary movement about at least one robot axis is monitored, wherein initiators (2.2, 2.21-2.26; 4.8; 6.8) cooperating with part annular cams (3.8, 4.6, 6.6) arranged coaxially to the axis for monitoring (A1, A2, A3) are provided and the initiators (2.2, 2.21-2.26; 4.8; 6.8) are connected to an evaluating device (2a) and wherein an initiator (2.2, 2.21-2.26; 4.8; 6.8) operating as an opener is associated with a cam corresponding to the danger area and an initiator operating as a closer is associated with a cam corresponding to the release area for the same area to be monitored.

2. Robot according to claim 1, **characterized by** grooved strips (3.4, 4.4, 6.6) arranged coaxially to the axis (A1, A2, A3) around which a movement is monitored and which are connected to cams (3.8, 4.6, 6.6) and that an initiator (2.2, 2.21-2.26; 4.8; 6.8) is associated with each cam (3.8, 4.6, 6.6).

3. Robot according to claim 1 or 2, **characterized in that** two initiators (2.2, 2.21-2.26; 4.8; 6.8) are associated with each cam (3.8, 4.6, 6.6).

4. Robot according to one of the preceding claims, **characterized in that** the initiators (2.2, 2.21-2.26; 4.8; 6.8) are held in a holder (2.1, 4.2) and are positioned laterally of the grooved strips (3.4, 4.4, 6.4) carrying the cams (3.8, 4.6, 6.6).

5. Robot according to one of the preceding claims, **characterized in that** the cams (3.8, 4.6. 6.6) are held by two-part cam end pieces (3.14), whose lower part (3.15) is positively held in the radial direction in the grooved strip and whose upper part (3.16) is connected to the lower part.

6. Robot according to claim 5, **characterized in that** for force-fitting the lower part (3.14, 3.15) and the upper part (3.16) are braced against one another on the grooved strip (3.4, 4.4, 6.4) and are braced against the latter.

7. Robot according to claim 5 or 6, **characterized in that** a cam (3.8, 4.6, 6.6) is fixed between two cam end pieces (3.14).

8. Robot according to claim 7, **characterized in that** the cam (3.8, 4.6, 6.6) is connected to the cam end pieces (3.14) by threaded pins.

9. Robot according to one of the preceding claims, **characterized in that** the initiators (2.2, 2.21-2.26; 4.8; 6.8) are adjustable and fixable relative to the cams (3.8, 4.6, 6.6) associated therewith both radially and in elevation parallel to the axis to which the cams (3.8, 4.6, 6.6) are coaxially arranged.

10. Robot according to one of the preceding claims, **characterized by** an at least two-channel monitoring for each area (G, F) to be monitored.

11. Robot according to one of the preceding claims, **characterized by** a combination of an area monitoring of the movement of the robot with an access monitoring with respect to the robot.

## Revendications

1. Robot comportant un dispositif de surveillance de zone, au moins une zone d'un mouvement de rotation autour d'au moins un axe de robot étant surveillée, dans lequel sont prévus des initiateurs (2.2, 2.21-2.26; 4.8; 6.8) coopérant avec des cames (3.8, 4.6, 6.6) partiellement annulaires agencées coaxialement à l'axe (A1, A2, A3) à surveiller, les initiateurs (2.2, 2.21-2.26 ; 4.8 ; 6.8) étant en liaison avec un dispositif d'évaluation, et un initiateur (2.2, 2.21-2.26 ; 4.8 ; 6.8) travaillant en tant que dispositif d'ouverture étant associé à une came correspondant à une zone de danger et un initiateur travaillant en tant que dispositif de fermeture étant associé à une came correspondant à une zone de libération pour la même zone à surveiller.

2. Robot selon la revendication 1, **caractérisé par** des barres à rainure (3.4, 4.4, 6.4) agencées coaxialement à l'axe (A1, A2, A3) autour duquel un mouvement est surveillé, lesquelles sont reliées à des cames (3.8, 4.6, 6.6), un initiateur (2.2, 2.21-2.26 ; 4.8 ; 6.8) étant associé à chaque came (3.8, 4.6, 6.6).

3. Robot selon la revendication 1 ou 2, **caractérisé en ce qu'**à chaque came (3.8, 4.6, 6.6) sont associés respectivement deux initiateurs (2.2, 2.21-2.26 ; 4.8 ; 6.8).

4. Robot selon l'une des revendications précédentes, **caractérisé en ce que** les initiateurs (2.2, 2.21-2.26 ; 4.8 ; 6.8) sont maintenus dans un support et agencés latéralement aux barres à rainure (3.4, 4.4, 6.4) portant les cames (3.8, 4.6, 6.6).

5. Robot selon l'une des revendications précédentes, **caractérisé en ce que** les cames (3.8, 4.6, 6.6) sont maintenues par des embouts de came (3.14) en deux parties, dont la partie inférieure (3.15) est maintenue dans la barre de came par coopération de formes en direction radiale et dont la partie supérieure (3.16) est reliée à la partie inférieure.

6. Robot selon la revendication 5, **caractérisé en ce que** la partie inférieure (3.14, 3.15) et la partie supérieure (3.16) peuvent être serrées l'une contre l'autre et contre la barre à rainure (3.4, 4.4, 6.4) pour fixer celle-ci par coopération de forces.

7. Robot selon la revendication 5 ou 6, **caractérisé en ce qu'**une came (3.8, 4.6, 6.6) est fixée entre deux embouts de came (3.14).

8. Robot selon la revendication 7, **caractérisé en ce que** la came (3.8, 4.6, 6.6) est reliée aux portions de came intermédiaires (3.14) par des tiges filetées.

9. Robot selon l'une des revendications précédentes, **caractérisé en ce que** les initiateurs (2.2, 2.21-2.26 ; 4.8 ; 6.8) peuvent être réglés et fixés par rapport aux cames (3.8, 4.6, 6.6) qui leur sont associées, radialement et, dans la direction de la hauteur, parallèlement à l'axe par rapport auquel les cames (3.8, 4.6, 6.6) sont agencées coaxialement.

10. Robot selon l'une des revendications précédentes, **caractérisé par** une surveillance à deux canaux pour chacune des zones (G, F) à surveiller.

11. Robot selon l'une des revendications précédentes, **caractérisé par** une combinaison d'une surveillance de zone du mouvement du robot avec une surveillance d'accès au robot.
